# EUROPÄISCHE PATENTSCHRIFT

(11) **EP 4 437 857 B1**
(45) Veröffentlichungstag und Bekanntmachung des Hinweises auf die Patenterteilung: **21.05.2025**
(21) Anmeldenummer: 23165966.5
(22) Anmeldetag: 31.03.2023
(51) Int. Cl.: A23L 13/20, A23L 13/40, A23L 13/60, A23B 4/00

(54) **VERFAHREN ZUR HERSTELLUNG EINES BRATFÄHIGEN UND BLOCKFÄHIGEN ERSATZPRODUKTES FÜR EINE BLOC FOIE GRAS**
METHOD FOR PREPARING A SUBSTITUTE PRODUCT FOR A BLOC FOIE GRAS SUITABLE FOR FRYING
PROCÉDÉ DE PRÉPARATION D'UN PRODUIT DE SUBSTITUTION D'UN BLOC FOIE GRAS APPROPRIÉ POUR LA FRITURE

(43) Veröffentlichungstag der Anmeldung: 02.10.2024
(73) Patentinhaber: EthicLine GmbH, 38104 Braunschweig (DE)
(72) Erfinder: SUDHOFF, Tobias, 48268 Greven (DE)
(74) Vertreter: Maikowski & Ninnemann Patentanwälte Partnerschaft mbB

(56) Entgegenhaltungen:
- EP-A2- 4 101 294
- US-A1- 2011 142 992

## Beschreibung

Die vorliegende Erfindung betrifft ein Verfahren zur Herstellung eines bratfähigen und blockfähigen Leberersatzes, insbesondere eines Gänsestopfleberersatzes oder Entenstopfleberersatzes.

Wassergeflügel kann für den winterlichen Langstreckenflug in den Süden die benötigte Energie in Form von Fett in der Leber speichern. Hierzu kann die Leber besonders viel Fett in Form von Triglyceriden speichern. Die Gavage oder Zwangsmästung von Gänsen oder Enten nutzt diese Fähigkeit der Tiere aus und fügt der einfachen Leber (ca. 100-150g) Fett in so hohem Maße zu, dass eine stoffwechselphysiologisch pathologisch vergrößerte Leber von bis zu 1,5kg entsteht.

Die so gewonnene Gänsestopfleber (Foie Gras) ist eine kulinarische Spezialität im hohen Preissegment, die insbesondere in Frankreich, aber auch in vielen anderen Ländern der Welt sich aufgrund der sensorischen Eigenschaften als auch ihrer Pairing-Möglichkeiten und ihrer Kombinierbarkeit großer Beliebtheit erfreut.

Die Produktion dieser Spezialität jedoch ist mit der ethisch hochkritischen Zwangsmästung verbunden und steht darum massiv weltweit in der Kritik. Viele Länder haben die Produktion und z.T. auch den Verkauf von Foie Gras in jeder Form aufgrund dieser Umstände in der Zwischenzeit verboten. Darum ist es für die kulinarische Szene von großer Bedeutung ein entsprechendes Ersatzprodukt zur Verfügung zu haben.

Es sind Verfahren zur Herstellung von stopfleberfreier Lebermousse (CH 690 413 A5) oder Leberpastete (EP 3 556 224 B1; EP 4 101 294 A2), bekannt. Diese unterscheiden sich jedoch von einer Bloc Foie Gras, insbesondere in der Konsistenz und den sensorischen Eigenschaften bzw. dem Mundgefühl.

Es gibt ohnehin nur sehr wenige Produkte auf dem Markt, die entweder als Bloc Foie Gras oder als Foie Gras zum Braten geeignet sind. Ein Produkt, dass beide Anforderungen jedoch erfüllt existiert auf dem Markt noch nicht.

Aufgabe der vorliegenden Erfindung war es demnach ein Verfahren zur Herstellung eines Ersatzproduktes für eine Bloc Foie Gras bereitzustellen, wobei auf die Verwendung von Stopfleber verzichtet werden kann und gleichzeitig die sensorischen Eigenschaften einer Bloc Foie Gras aufweist.

Des Weiteren sollen nur im ökologischen Landbau zugelassene Zusatzstoffe genutzt werden, um dem Produkt eine Biozertifizierung zu ermöglichen. Damit wurde es insbesondere nötig, die rheologischen Eigenschaften der Matrix durch natürliche Zutaten und die Temperaturführung im gesamten Prozess zu ermöglichen.

Diese Aufgabe wird mit einem Verfahren mit den Merkmalen des Anspruchs 1 gelöst.

Das vorliegende Verfahren ermöglicht die Bereitstellung eines Produktes, welches als Bloc Foie Gras oder als Foie Gras zum Braten geeignet sind.

Das vorliegende Verfahren umfasst mindestens vier Temperierungsphasen: Temperierungsphase A als erste Erwärmungsphase; Temperierungsphase B als erste Abkühlphase, Temperierungsphase C als zweite Erwärmungsphase bzw. Pasteurisierungsphase; und Temperierungsphase D als zweite Abkühlphase des pasteurisierten Produktes. Die spezifische Temperaturführung berücksichtigt die spezifischen Eigenschaften der Protein-Fett-Matrix des Lebergewebes und der beigefügten Fettanteile, wodurch der Aufbau der cremigen und kompakten Struktur des Produktes erreicht wird.

In dem verwendeten Lebergewebe wird mit dem Verfahren eine Protein-Fett-Wasser Matrix gebildet, die im Wesentlichen durch die Anordnung der Fettvakuolen eine nach Erwärmen durch Denaturierung der Proteine stabile Struktur ermöglicht. Für die Bloc Foie Gras wird die Struktur durch langsames Garen bei bestenfalls niedrigen Temperaturen erreicht, die man eventuell noch durch Homogenisierungsprozesse einheitlicher gestaltet. Es entsteht dadurch eine streichfähige Masse. Bei der rohen Foie Gras wird dies durch den Bratprozess erreicht.

Beides kennzeichnet sich durch eine besonders feine, cremige und doch kompakte Struktur aus; d.h. eine niedrige Viskosität ohne gelartige Strukturen mit höheren Scherkräften, die die Kompaktheit ermöglichen. Bei der gebratenen Foie Gras sind die geschmolzenen Fettanteile in der Proteinmatrix gefangen und werden in mechanischen Prozessen im Mund freigegeben. Bei der Bloc Foie Gras werden die Eigenschaften im Wesentlichen durch den Schmelz bestimmt.

In der Bloc Foie Gras liegen die Fette als langkettige Triglyceride (im Gegensatz zum Phlomfett des Geflügels enthält das Leberfett weniger kurze Ketten und weniger ungesättigte Fettsäuren) in der üblichen Stuhlkonformation innerhalb der Vakuolen und freien Mycellen aus Lipoproteinen vor. Bei der Homogenisierung und auch durch den Vorgang des Erhitzens werden die Vakuolen aufgebrochen und weitere Triglyceride geraten in die Matrix und werden z.T. in Mycellen gespeichert. Im Erstarrungsvorgang werden aufgrund des hohen Fettanteils (Bis zu 95%) rheologische Eigenschaften eingestellt, die durch Scherkräfte und Viskosität bestimmt werden. Daneben schmelzen einige der Triglyceride auffällig endotherm, was zur Folge hat, dass die Bloc Foie Gras kühlend im Mund schmilzt, was allgemein als sehr angenehm empfunden wird.

Des Weiteren ist das Verhältnis gesättigter zu ungesättigten Fettsäuren in den Triglyceriden wichtig für das Schmelzverhalten. Das Verhältnis S (saturated) zu U (unsaturated) verschiebt sich bei den meisten Fetten in der Happy Foie zu S und spielt so weniger eine Rolle im Verfahren.

Die gustatorische und olfaktorische Sensorik der Foie Gras ergibt sich im Wesentlichen aus den Proteinen im Lebergewebe und setzt voraus, dass diese Moleküle in einem Imitat ebenfalls zur Verfügung stehen. Dies wird durch die Zugabe von Fett erreicht. Dazu werden im Wesentlichen drei Eigenschaften rheologisch durch entsprechende Strukturierung der Matrix kopiert und dabei insbesondere die Eigenschaften der Temperaturführung und der Proteineigenschaften als Emulgatoren in der Matrix genutzt. Hier spielt insbesondere die als Emulgator verwendete Eigelbmischung eine besondere Rolle und das Auffaltungsverhalten der Proteine unter bestimmten Einfluss von Temperatur und Zeit.

Im vorliegenden Verfahren werden als tierische Leber Geflügelleber, insbesondere Gänseleber oder Entenleber, Schweineleber, Rinderleber, Hasenleber oder Rehleber verwendet. Der Einsatz von Geflügelstopfleber ist dabei explizit aus ethischen Gründen ausgenommen. Vielmehr ermöglicht das vorliegende Verfahren die Herstellung eines Geflügelstopfleberersatz insbesondere eines Gänsestopfleberersatzes oder Entenstopfleberersatzes.

In einer Ausführungsform des vorliegenden Verfahrens werden der Lebermasse Zusatzstoffe zur sensorischen und geschmacklichen Einstellung zugegeben, wobei die Zusatzstoffe sein können, Gewürze, wie Thymian, Rosamarin, Salbei, Zwiebel, Sellerie, Lauch, Salz, Zucker, Bouillon, Hühnerfond, bevorzugt getrockneter Hühnerfond, Antioxidantien, insbesondere Ascorbinsäure. Bevorzugte Zusatzstoffe sind Thymian, Salz, Zucker, Bouillon, getrockneter Hühnerfond, Ascorbinsäure.

Zur geschmacklichen Variabilität können Trüffel, Schokolade, Curry, Chili, Fruchsaucen, Fruchtkonfitüren, Trockenfrüchte, Nüsse und ähnliches zugegeben werden, um auch unterschiedliche Geschmacksrichtungen realisieren zu können.

Weiterhin werden zur Konservierung ein Nitritsalz, beispielsweise und insbesondere Natrium- und/oder Kaliumnitritsalz, zugegeben.

Die mit den Zusatzstoffen vermischte Lebermasse wird mechanisch zu einer Emulsion verarbeitet. Diese Verarbeitung kann z.B. in einem herkömmlichen Fleischer-Cutter erfolgen. Das Cuttern wird bevorzugt so durchgeführt wird, dass das Lebergewebe cremig konditioniert wird und/oder das Lebergewebe stockfrei bleibt.

In einer Ausführungsform des vorliegenden Verfahrens werden als Lebensmittelfette Butter, Nussbutter, Kokosfett und/oder Phlomfett verwendet. Besonders bevorzugt werden Nussbutter, Kokosfett und Phlomfett verwendet.

Unter dem Begriff "Butter" ist ein Produkt bekannt, dass meist aus Kuhmilch hergestellt wird, es jedoch auch auf pflanzlicher Basis gibt. Unter dem Begriff "Nussbutter" ist eine hellgebräunte und durch ein Tuch passierte flüssige Butter zu verstehen, wobei sie ihren namensgebenden nussähnlichen Geschmack durch karamelisierten Milchzucker erhält.

Unter dem Begriff "Kokosfett" (oder auch Kokosnussöl genannt) ist ein weißes bis gelblichweißes Pflanzenfett bekannt, dass aus der Kokosnuss, der Frucht der Kokospalme, gewonnen wird. Bevorzugterweise wird zur Vermeidung von irritierenden Sensoriken desodoriertes Kokosöl verwendet. Der besondere Vorteil von Kokosfett ist der, dass dieses als laurinreiches Fett endotherm schmilzt.

Erfindungsgemäß wird unter dem Begriff "Phlom" das Fett des Bauchfells und/oder der Nieren von Tieren verstanden. Besonders bevorzugt stammt das verwendete Phlomfett von einer Geflügeltierart, insbesondere von Gans oder Ente. Bevorzugt stammt das Phlom der Geflügeltierart, die das Lebergewebe liefert.

Das mindestens eine Lebensmittelfett wird mit einer Temperatur zwischen 40 und 45°C, bevorzugt 43-44°C, d.h. in flüssiger Form, bereitgestellt, wodurch Zugabe und Vermischen mit der Lebermasse erleichtert wird.

In einer Ausführungsform werden Nussbutter, Phlom und Kokosfett bei einer Temperatur von ca. +120 Grad Celsius für ca. 15 Minuten unter leichtem Rühren vermischt, um anschließend diese Fettmischung auf ca. +60 Grad Celsius abkühlen zu lassen, wobei es in diesem Zusammenhang zur Erhöhung der sensorischen Qualitäten von Vorteil ist, dass die Erwärmungsmasse aus Nussbutter, Phlom und Kokosöl bei einer Temperatur von ca. +50 Grad Celsius durch ein Sieb mit einer maximalen Maschengröße von ca. 0,5 mm gesiebt wird, um die Homogenität zu erhöhen.

Die Bestimmung des Fettgehaltes des verwendeten Lebergewebes wird vorab histologisch und über Verdampfung durchgeführt, um dann daraus im Zusammenhang mit dem Gewicht Rückschlüsse zum notwendigen Fettanteil für das gewünschte Produkt ziehen. Sollte der Fettgehalt des verwendeten Lebergewebes zu gering sein, wird der ermittelte Mangel an Fett durch Zugabe von Nussbutter ausgeglichen. Dies gilt insbesondere dann, wenn es sich nicht um sogenannte Herbstlebern handelt oder gar um ganz andere Lebern, die sich genauso verarbeiten lassen, wie Rehleber.

Als der Lebermasse zugegebene alkoholische Getränkeflüssigkeit kann mindestens ein Weinbrand, insbesondere Cognac oder Armagnac, Wein, insbesondere weißer Portwein oder Madeira verwendet werden.

Wie erwähnt, wird die Lebermischung aus flüssiger Nussbutter, Kokosfett und Weinbrand, insbesondere Cognac, in einer ersten Temperierungsphase A erwärmt. In einer Ausführungsform des vorliegenden Verfahrens wird in der ersten Temperierungsphase A die Lebermischung aus flüssiger Nussbutter, Kokosfett und Weinbrand, insbesondere Cognac, mit einem Temperaturgradienten von 1 - 1,5°C / 3 Minuten auf 58°C erwärmt.

Wie ebenfalls oben bereits erwähnt, wird in der ersten Temperierungsphase A der Lebermischung bei einer Temperatur von 42- 50°C, bevorzugt 45-49°C, insbesondere bevorzugt bei 46-48°C eine Emulgatormischung aus Eigelb und mindestens einer Phospholipase zugeführt.

Die verwendete Eigelb-Phospholipase-Emulgatormischung umfasst in einer Variante zwischen 1-2 g, bevorzugt 1,5 g mindestens einer Phospholipase pro kg Eigelb.

Die Verwendung von Phospholipasen in fleischhaltigen Produkten ist aus der US 2011/0142992 A1 bekannt. Die Verwendung der Phospholipase in der vorliegenden Lebermischung bewirkt eine Verkleinerung der in der Lebermischung vorliegenden Fettmycellen. Es hat sich nämlich gezeigt, dass die Größe der Fettmycellen einen Einfluss auf die Cremigkeit des Produktes hat. Neben den langen Ketten der Triglyceride spielen die in den Fettmycellen vorhandenen oberflächenaktiven Phopholipide eine wesentliche Rolle. Diese haben auf die Größe der Phospholipidmycellen wesentlichen Einfluss. Durch die Verwendung der Phospholipase können Mycellen maximal zu verkleinert werden.

Phospholipasen sind Enzyme, die im Körper üblicherweise im Pankreassekret vorkommen und dort die Aufgabe übernehmen, Phopholipide zu spalten. Diese Gruppe von Enzymen wird in Phospholipasen A, B, C und D kategorisiert je nachdem, wo sie die Spaltung im Molekül vornehmen: Phospholipase A₁ spaltet eine ungesättigte Fettsäure an ihrer Esterbindung am C1-Atom; Phospholipase A₂: spaltet eine ungesättigte Fettsäure an ihrer Esterbindung am C2-Atom; Phospholipase B kann an Sn-1 und Sn-2 Position die Fettsäureesterbindung spalten, Phospholipase C spaltet vor Phosphoratom der Phosphatgruppe, Phospholipase D spaltet nach Phosphoratom.

Bekannt sind auch chimere Phospholipasen, bei denen Gene von Lipasen aus erschiedenen Organismen zusammengefügt wurden. Eine bekannte chimere Phospholipase ist die Lecitase, die durch die Fusion der Gene der Lipase von Thermomyces lanuginosus und der Phospholipase A1 von Fusarium oxysporum hergestellt wird.

Im vorliegenden Verfahren wird bevorzugt eine Phospholipase A2 verwendet.

Neben dem Effekt der Phospholipase spielt die Grenzflächenaktivität der Proteine des Eigelbs zur Emulsionsbildung eine Rolle. Ebenso hat das in der Lebermischung enthaltene Salz starken Einfluss auf die Kolloidbildung im Prozess der Temperaturführung.

Die Emulgatormischung aus Eigelb und mindestens einer Phospholipase wird in einem Verfahren mit den folgenden Schritten hergestellt:
a) Bereitstellen von Eigelb und Zugabe der mindestens einer Phospholipase zum Eigelb;
b) Aktivieren der mindestens einen Phospholipase durch Erwärmen der Mischung aus Eigelb und Phospholipase auf eine Temperatur zwischen 45 und 65°C, bevorzugt zwischen 50 und 60°C, insbesondere bevorzugt zwischen 54 und 60°C in Abhängigkeit von der Aktivierungstemperatur der Phospholipase. Dies kann z.B. in einem Konvektomaten bei einer Luftfeuchtigkeit von 80-95% erfolgen.
c) Halten der Mischung aus Eigelb und Phospholipase bei einer Temperatur zwischen 50 und 60°C, bevorzugt zwischen 54 und 60°C, über einen Zeitraum von 2 bis 4 h, und
d) anschließende Deaktivierung der Phospholipase durch Erhitzen der Mischung aus Eigelb und Phospholipase auf eine Temperatur zwischen 60 und 90°C, bevorzugt zwischen 65 und 85°C, insbesondere bevorzugt zwischen 68 und 80°C, ganz besonders bevorzugt zwischen 74 und 78°C über einen Zeitraum von 5 bis 15 min, bevorzugt 6 bis 12 Minuten, und Erhalt der fertig einsetzbaren Emulgatormischung

Wie erwähnt, wird die Eigelb-Phospholipase-Emulgatormischung in der ersten Temperierungsphase A, die einer ersten Erwärmungsphase entspricht, der Lebermischung zugegeben und gemischt, wobei die Lebemischung emulisifiert wird.

Nach Erreichen einer Kerntemperatur der Leberemulsion von 58°C wird die Leberemulsion in einer zweiten Temperierungsphase B (erste Abkühlphase) auf eine Temperatur von 30 - 33°C, besonders bevorzugt 32°C mit einem Temperaturgradienten von 1,5°C / Minute bei gleichzeitigem Rühren der Masse mit einem Mischgerät, insbesondere mit einem Emulgationsmixer (wie z.B. einem Stabmixer) bei min. 8000 rpm, unter Ausbildung einer homogenen Creme abgekühlt.

In einer Ausführungsform kann während des Abkühlens und Rührens in dieser Abkühlphase weiterer Alkohol, insbesondere Weinbrand, der Leberemulsion zugegeben werden.

Wie oben erwähnt, wird auch in dieser Temperierungsphase B weitere Eigelb-Phospholipase-Emulgatormischung zugegeben, insbesondere bei einer Temperatur von 48°C +- 0,5°C.

In anschließenden Abfüllschritt wird die Lebercreme bei Erreichen einer Endtemperatur der Lebercreme von 30 - 35°C, bevorzugt 32-33 °C in Gläser oder Wurstdarm abgefüllt wird.

Die mit der Lebercreme gefüllten Verpackungen werden in einer dritten Temperierungsphase C (einer zweiten Erwärmungsphase) auf eine Temperatur von 63 - 75 °C, bevorzugt 65-75°C, insbesondere bevorzugt 68-72°C bevorzugt mit 100% Wasserdampf erwärmt. Nach Erreichen der (Kern)Temperatur werden die mit der Lebercreme gefüllten Verpackungen für einen Zeitraum von 30-90 min, bevorzugt 35 - 70 Minuten, besonders bevorzugt 40-50 Minuten pasteurisiert. Dabei ist zu beachten, dass Temperatur und Zeit sich während des Pasteurisierungsvorganges bedingen; d.h. je geringer die Temperatur desto länger die Pasteurisierungszeit und umgekehrt. In einer besonders bevorzugten Ausführungsform beträgt die Pasteurisierungstemperatur zwischen 68 und 72°C und die Pasteurisierungszeit zwischen 45 und 60 Minuten.

In der sich dem Pasteurisierungsvorgang anschließenden vierten Temperierungsphase D (zweite Abkühlphase) wird die pasteurisierte Lebercreme zunächst in einem ersten Schritt zunächst bei einer Temperatur zwischen -18°C und - 22°C, bevorzugt -20°C auf eine Kerntemperatur von 16 bis 24°C, bevorzugt 18 bis 22°C, insbesondere bevorzugt 20°C abgekühlt. Die Abkühlung erfolgt in diesem Schritt somit mit einem steilen Temperaturgradienten. Das schnelle Abkühlen dient der Fixierung der Matrix, da es ansonsten zu einer Ausbildung von Wasserstoffbrücken und Disulfid-Brücken zwischen Fettsäuren und somit kristallinen Struktur kommen würde.

Nach Erreichen der Kerntemperatur von 16 bis 24°C, bevorzugt 18 bis 22°C, insbesondere bevorzugt 20°C wird der Abkühlungsprozess verlangsamt und die in den Verpackungen befindliche Lebercreme wird in einem zweiten Schritt bei einer Temperatur von -4°C bis 0°C, bevorzugt -3°C bis -1°C, insbesondere bevorzugt -2°C auf eine Temperatur von 2 bis 4°C abgekühlt.

Das mit dem vorliegenden Verfahren bei genau diesem Temperaturverlauf hergestellte Produkt ergibt alle Eigenschaften einer Bloc Foie Gras: Der Schmelz entspricht durch die Konformation, die verkürzten Phopholipide, Größe der Mycellen, Entfaltung und nur Teildenaturierung der Proteine sowie durch die endotherme Schmelze der Kokosfette in Viskosität, Scherkräften und Mundgefühl dem einer konventionellen Bloc Foie Gras - wie in einem Texturmessgerät nachgewiesen werden konnte. Sie unterscheidet sich damit auch fundamental von einer Pathé, bei der die Proteine mangels temperierter Führung weder diese Art der Grenzflächenaktivität kontrolliert ausführen und in der Masse nicht diese Art der Kompaktheit erfüllen können, noch sind die Mycellen mangels Enzymeinsatz so klein noch erreicht die Pathé wegen des kleineren Fettanteils diese Cremigkeit.

Auch sensorisch liegen ausreichend Fette vor sowie die lebertypischen Aromen, um einer Foie Gras zu entsprechen, wie ein Doppel-Blind-Test der FH Münster (Prof. Thorsten Sander) mit erfahrenen Foie Gras Konsumenten beweist.

Die entstandene Masse ergibt außerdem die Möglichkeit, diese Bloc Foie Gras zu braten: Es liegen ausreichend nicht-denaturierte Proteine vor, um bei sehr hohen Temperaturen in der Pfanne einen festen Mantel aus denaturierten Proteinen und eine innere, proteinstabilierte Struktur zu bilden. Die Masse behält bei Temperaturen von ca. 40°C im Kern ihre cremige Struktur ohne auseinander zu fallen, hat an der Oberfläche dann aber die typischen Bräunungsreaktionen (Maillard), die in der gebratenen Foie Gras gewünscht sind.

Das spezielle Temperierungsverfahren in Kombination mit der Rezeptur ermöglicht somit ein neuartiges Produkt - Bloc-Foie Gras und bratbare Foie Gras zugleich, in der handlichen Verpackung und ohne die ethisch äußerst bedenklichen Kollateraleffekte der Zwangsstopfung bzw. Zwangsernährung

Die vorliegende Erfindung wird nachfolgend im Detail anhand von mehreren Ausführungsbeispielen erörtert.

### Ausführungsbeispiel 1: eine erste Ausführungsform des erfindungsgemäßen Verfahrens

Die Leber wird über eine Zentrifugalpresse von Bindegewebe befreit. Die Masse wird mit Salz, Zucker, Würzmitteln, getrocknetem Hühnerfond, Ascorbinsäure als Antioxidans gewürzt und anschließend in einem Cutter zu einer sehr feinen Creme/Emulsion mechanisch verarbeitet. Dadurch wird das Natriumchlorid ionisiert und kann damit als Ionen im Prozess zur Verfügung stehen.

Die Butter wird zu Nussbutter verarbeitet und warmgehalten (ca. 44°C). Das Kokosfett wird in der Nussbutter ebenfalls gelöst. Nussbutter, Kokosfett und die Lebermasse werden nun in einem Kessel zusammen mit Cognac mit einem Hochdrehzahl-Stabmixer aufgeschlagen zu einer homogenen Masse und langsam erwärmt. In Versuchsreihen wurde eine Temperaturführung zwischen 35°C bis ca 55°C mit einer Geschwindigkeit von ca. 1°C/3 Minuten als optimal ermittelt. Langsamer gibt den Proteinen bei der Entfaltung zu viel Zeit zum Denaturieren, schneller denaturiert die Proteine im höheren Temperaturbereich durch ein höheres Delta T in der Masse teilweise und ergibt ein Ungleichgewicht aus Entfaltung und irreversibel geschädigten Proteinen (8 und 4, S. 586).

Bei 48°C wird die Eigelb-Phospholipase-Mischung in den Prozess eingeführt und die Lebermischung mittels des Stabmixers bis 52°C emulgiert. Es entfalten sich in diesem Temperaturbereich die ersten Proteine (zunächst Alpha-Livetin, dann Conalbumin und durch die Enthalpie weitere Proteine) entlang der Öl/Wasser-Grenzfläche gemäß sterische Bedingungen. Dieser Prozess geschieht ab 52°C bei Rühren durch ein Rührwerk ohne weiteren mechanischen emulgatorischen Einfluss in der Erwärmungsphase (Temperierungs-Phase A). Es bilden sich Kolloide aus, die nur vorsichtig mit dem Rührwerk manchmal etwas aufgelöst werden. Diese Cluster sind keine Mycellenbildungen, sondern vielmehr das vorsichtige Auffalten der Eigelb-Proteine und das Öffnen des hydrophoben Herzens der Proteine zum Fett -vVorhandene Mycellen bleiben in der Umgebung stabil, aber es bilden sich keine weiteren aus, Fett wird in der Umgebung der Kolloide frei. Der Prozess ist so gewollt. Die Proteinpackungen schwellen in einer Größe von bis zu 1,5cm an - dies scheint optimal zu sein.

Bei Erreichen einer Kerntemperatur von 58°C bilden sich maximale Proteincluster in einer lockeren Anordnung, höhere Temperaturen sorgen für irreversible Denaturierung der Eigelb-Proteine und destabilisieren auch die Lipoproteine in der Phase. Im Kessel ist nun eine intensive Überwachung der Temperatur nötig, es sollte nirgends ein größeres Delta T als 3°C entstehen - dies wird über das Rührwerk und die saubere Temperaturführung des Kessels gewährleistet.

Bei Erreichen der 58°C Kerntemperatur der Lebermasse wird schlagartig die Kühlung angeschaltet (Temperierungs-Phase B), mit ca 1,5°C pro Minute wird nun abgekühlt, weiterer Cognac hinzugegeben und mit dem Hochleistungsrührmixer die Masse emulgiert. Dies bewirkt nicht nur eine maximal homogene Temperaturverteilung sondern auch noch besonders intensive Emulgierung: Die aufgefalteten Proteine können sich nun vor allem mit den Alphahelikalen Teilen entlang der wässrigen Phase ausrichten und die in der lipophilen Fraktion können die Fette nun sich anordnen. Durch die mechanische Bewegung wird ein hohes Maß an amorpher Erstarrungsmuster der Fette erreicht, eventuelle Mycellen, die sich verbunden haben werden wieder in kleinere Einheiten zerschlagen, die ersten langkettigen Fettsäurereste ordnen sich an. Bei 48°C geben wir noch einmal Eigelb in den Prozess (welches vor allem später beim Pasteurisierungsvorgang Denaturierungs- und Entfaltungsprozessen unterliegt) und lassen die Temperatur bei weiterem Emulgieren stürzen.

Auf diese Weise wird eine homogene Creme erhalten, die bei Erreichen einer Kerntemperatur von 32°C Kerntemperatur unter Druck (Füllmaschine) abgefüllt wird. Die abgefüllte Masse unterschreitet nicht die Temperatur von 25°C, so dass die Fettsäuren immer noch in einer recht fluiden, nicht erstarrten Form vorliegen. Dazu werden die durch das Enzym verkürzten Ketten in den Mycellen als auch die Proteinstruktur in der Matrix benutzt, die die Fettsäuren durch die zweite Gabe an emulgierendem Eigelb noch nicht weiter stabilisiert. Es herrscht auf diese Weise in der Matrix eine äußerst instabile Mischung aus verschiedenen Fettsäurekonfomationen (Alpha, Beta' und Beta Konformation) und zahlreichen Grenzflächenaktivitäten und insbesondere innerhalb dieser Matrix sehr kleinen und proteinbstabilisierten Mycellen (Enzym) die durch die nun folgende Pasteurisierung in einem dritten Schritt (Temperierungs-Phase C) strukturstabilisiert wird.

Die abgefüllte Masse, die so in der Verpackungsform (Gläser, Wurstdarm o.ä.) bleiben wird, darf in dieser Phase auch nicht mehr stark erschüttert werden (Mycellenagglomeration verhindern) und wird nun in einem Kombidämpfer bei einer Temperatur von 72°C und 100% Dampf pasteurisiert. Sobald die Kerntemperatur von 69°C erreicht ist, wird diese im Kombidämpfer eingestellt und 45 Minuten pasteurisiert (dies reicht aus für eine Haltbarkeit von 9 Monaten. Außerdem entfalten sich vor allem die Proteine aus dem Eigelb aus der zweiten Phase, ordnen sich erneut grenzflächenaktiv an und stabilisieren die Matrix endgültig.

Die erhitzten Gläser werden nach 45 Minuten nun wiederum mit möglichst wenig Erschütterung direkt in einen Freezer gestellt (Fahrgestell) und dort einem extremen Temperatursturz ausgesetzt (Temperierungsphase D): Bei ca. -20°C stürzt die Temperatur bis unter die Erstarrungstemperatur der Fette in der Matrix (bei ca. 18°C sind alle enthaltenen Fette konformiert) aber ohne unter die Gefriergrenze zu geraten. Bei 18°C wird die Temperaturkurve weniger steil angestellt und bis 2°C gefahren.

Die entstandene Masse bei genau diesem Temperaturverfahren ergibt alle Eigenschaften einer Bloc Foie Gras. Die entstandene Masse ergibt außerdem die Möglichkeit, diese Bloc Foie Gras zu braten.

### Ausführungsbeispiel 2: Rezeptur allgemein

| **Rezeptur** | | | |
|---|---|---|---|
| **Grundbrät** | | **Gewürze** | |
| Leber | 50kg | Butter | 37,33kg |
| Phlomen | 0,833kg | Kokosfett | 5,833kg |
| | | Trüffelbutter | |
| | | Cognac teuer | 1000ml |
| | | Cognac | 1500ml |
| | | Eigelb | 7,300kg |
| | | Vollei | 1,900kg |
| | | Salz | 1,116kg |
| | | Trüffelsalz | |
| | | Zucker | 1,300kq |
| | | Bouillon | 0,266kg |
| | | Thymian | 0,033kg |
| | | Agar Agar | 0,120kg |
| | | Nitrit | 0,007kg |
| | | Vitamin C | 0,044kq |
| Gesamt | | Lipomod | 8,0 ml |

### Ausführungsbeispiel 3: Entenleber

Inhaltsangaben kalkuliert auf 10kg Entenlebergewebe:
Butter: 7,65kg
Kokos: 1,17kg
Phlom: 0,17kg
Cognac billig: 0,3L
Salz: 223g
Zucker: 184g
Bouillon:54g
Thymian:7g
Nitrit: 1,4g
Vit C:7,8g
Lecitase Ultra: 3,2g
Eigelb: 1,46kg Phospholipase A2 Enzymaktiviert (=2,1kg gesamt Eigelb in der Kalkulation)
Vollei:0,366kg
Agar 30g auf 0,4 Liter Wasser
Edler Cognac: ca 300ml

### Ausführungsbeispiel 4: Gansleber

Inhaltsangaben kalkuliert auf 10kg Ganslebergewebe:
Butter: 7,666kg
Kokos: 1,166kg
Phlom: 0,333kg
Cognac billig: 0,3 L
Salz: 216g
Zucker:183g
Bouillon: 53g
Thymian: 6g
Nitrit: 1,4g
Vit C: 8,5g
Lecitase Ultra 3,2g
Eigelb: 1,46kg Enzymaktiviert (=2,1kg gesamt Eigelb in der Kalkulation)
Vollei: 1,3kg
Agar 26g auf 0,38 Liter Wasser
Min ca 900-1100ml Cognac:

## Patentansprüche

1. Verfahren zur Herstellung eines bratfähigen und blockfähigen Ersatzproduktes für eine Bloc Foie Gras,
umfassend die folgenden Schritte
- Bereitstellen von mindestens einem Teil einer tierischen Leber und Entfernen des Bindegewebes von der tierischen Leber,
- Vermischen der bindegewebsfreien Lebermasse mit Salz und Zusatzstoffen zur sensorischen und geschmacklichen Einstellung,
- mechanisches Verarbeiten der Lebermasse zu einer Emulsion,
- Bereitstellen von mindestens einem verflüssigten Lebensmittelfett und mindestens einer alkoholischen Getränkeflüssigkeit,
- Vermischen der Leberemulsion mit dem flüssigen Lebensmittelfett und der alkoholischen Getränkeflüssigkeit, und Erwärmen der Lebermischung in einer ersten Temperierungsphase A unter Temperaturerhöhung von 35°C auf 58°C mit einem Temperaturgradienten von 1-5°C/1-5 Minuten, bevorzugt 1 - 1,5°C / 3 Minuten,
- während der ersten Temperierungsphase A bei einer Temperatur von 42- 50°C, bevorzugt 45-49°C, insbesondere bevorzugt bei 46-48°C Zugabe einer Emulgatormischung aus Eigelb und mindestens einer Phospholipase zu der Lebermischung,
- nach Erreichen einer Kerntemperatur der Leberemulsion von 58 °C Abkühlen der Mischung aus Leber, Emulgatormischung, Lebensmittelfett, alkoholischer Getränkeflüssigkeit und Zusatzstoffen in einer zweiten Temperierungsphase B auf eine Temperatur von 28 - 35°C, bevorzugt 30 - 33°C, besonders bevorzugt 32°C mit einem Temperaturgradienten von 1-2°C/ Minute, bevorzugt 1,5°C / Minute bei gleichzeitigem Rühren der Masse mit einem Mischgerät unter Ausbildung einer homogenen Creme,
- während der zweiten Temperierungsphase B bei einer Temperatur von 45 - 53°C, bevorzugt 47-50°C, besonders bevorzugt 48-49°C Zugabe von weiterer Emulgatormischung aus Eigelb und mindestens einer Phospholipase, zu der Lebercreme,
- bei Erreichen einer Endtemperatur der Lebercreme von 30 - 35°C, bevorzugt 32-33 °C Abfüllen der Lebercreme unter Druck in geeignete Verpackungen,
- Erwärmen der mit der Lebercreme gefüllten Verpackungen in einer dritten Temperierungsphase C auf eine Temperatur von 63 - 75 °C, bevorzugt 65-75°C, insbesondere bevorzugt 68-72°C in einer Dampfatmosphäre und nach Erreichen der Temperatur Pasteurisierung der mit der Lebercreme gefüllten Verpackungen für einen Zeitraum von 30-90 min, bevorzugt 35 - 70 Minuten, besonders bevorzugt 40-50 Minuten,
- nach Beenden des Pasteurisierungsvorganges, Abkühlung der pasteurisierten Lebercreme in einer vierten Temperierungsphase D auf eine Endtemperatur der Lebercreme auf 2-4°C.

2. Verfahren nach Anspruch 1, **dadurch gekennzeichnet, dass** als tierische Leber eine Geflügelleber, insbesondere Gänseleber oder Entenleber, Schweineleber oder Rinderleber verwendet wird.

3. Verfahren nach einem der vorhergehenden Ansprüche, **dadurch gekennzeichnet, dass** als Zusatzstoffe zur sensorischen und geschmacklichen Einstellung, Gewürze, wie Thymian, Salz, Zucker, Bouillon, Hühnerfond, bevorzugt getrockneter Hühnerfond, Antioxidantien, insbesondere Ascorbinsäure, verwendet werden.

4. Verfahren nach einem der vorhergehenden Ansprüche, **dadurch gekennzeichnet, dass** als Lebensmittelfette Nussbutter, Kokosfett und/oder Phlomfett verwendet werden.

5. Verfahren nach Anspruch 4, **dadurch gekennzeichnet, dass** das mindestens eine Lebensmittelfett mit einer Temperatur zwischen 40 und 45°C, bevorzugt 43-44°C bereitgestellt wird.

6. Verfahren nach einem der vorhergehenden Ansprüche, **dadurch gekennzeichnet, dass** als alkoholische Getränkeflüssigkeit mindestens ein Weinbrand, insbesondere Cognac oder Armagnac, Wein, insbesondere weißer Portwein oder Madeira verwendet werden.

7. Verfahren nach einem der vorhergehenden Ansprüche, **dadurch gekennzeichnet, dass** in der ersten Temperierungsphase A eine Lebermischung aus flüssiger Nussbutter, Kokosfett und Weinbrand, insbesondere Cognac, mit einem Temperaturgradienten von 1 - 1,5°C / 3 Minuten auf 58°C erwärmt wird.

8. Verfahren nach einem der vorhergehenden Ansprüche, **dadurch gekennzeichnet, dass** die Eigelb-Phospholipase-Emulgatormischung zwischen 1-2 g, bevorzugt 1,5 g mindestens einer Phospholipase pro kg Eigelb umfasst.

9. Verfahren nach einem der vorhergehenden Ansprüche, **dadurch gekennzeichnet, dass** nach Erreichen einer Kerntemperatur der Leberemulsion von 58°C die Leberemulsion in einer zweiten Temperierungsphase B auf eine Temperatur von 30 - 33°C, besonders bevorzugt 32°C mit einem Temperaturgradienten von 1,5°C / Minute bei gleichzeitigem Rühren der Masse mit einem Mischgerät, insbesondere mit einem Emulgationsstabmixer bei min. 8000 rpm, unter Ausbildung einer homogenen Creme abgekühlt wird.

10. Verfahren nach einem der vorhergehenden Ansprüche, **dadurch gekennzeichnet, dass** während der zweiten Temperierungsphase B bei einer Temperatur von 48°C +- 0,5°C weiterer Emulgatormischung aus Eigelb und mindestens einer Phospholipase zugegeben wird.

11. Verfahren nach einem der vorhergehenden Ansprüche, **dadurch gekennzeichnet, dass** die Lebercreme bei Erreichen einer Endtemperatur der Lebercreme von 30 - 35°C, bevorzugt 32-33 °C in Gläser oder Wurstdarm abgefüllt wird.

12. Verfahren nach einem der vorhergehenden Ansprüche, **dadurch gekennzeichnet, dass** die mit der Lebercreme gefüllten Verpackungen in einer dritten Temperierungsphase C mit 100% Wasserdampf erwärmt wird und nach Erreichen der Kerntemperatur von 68-72°C für 40-50 Minuten, bevorzugt 45 Minuten pasteurisiert wird.

13. Verfahren nach einem der vorhergehenden Ansprüche, **dadurch gekennzeichnet, dass** nach dem Pasteurisierungsvorgang die pasteurisierte Lebercreme in der vierten Temperierungsphase in einem ersten Schritt zunächst bei einer Temperatur zwischen -18°C und - 22°C, bevorzugt -20°C auf eine Kerntemperatur von 16 bis 24°C, bevorzugt 18 bis 22°C, insbesondere bevorzugt 20°C abgekühlt wird und in einem zweiten Schritt bei einer Temperatur von -4°C bis 0°C, bevorzugt -3°C bis -1°C, insbesondere bevorzugt -2°C auf eine Temperatur von 2 bis 4°C abgekühlt wird.

## Claims

1. Process for the production of a fryable and blockable substitute product for a bloc foie gras,
comprising the following steps
- Providing at least part of an animal liver and removing the connective tissue from the animal liver,
- Mixing of the liver mass free of connective tissue with salt and additives for sensory and flavour adjustment,
- mechanical processing of the liver mass into an emulsion,
- Providing at least one liquefied food fat and at least one alcoholic beverage liquid,
- Mixing the liver emulsion with the liquid food fat and the alcoholic beverage liquid, and heating the liver mixture in a first tempering phase A with a temperature increase from 35°C to 58°C with a temperature gradient of 1-5°C/1-5 minutes, preferably 1 - 1.5°C / 3 minutes,
- during the first tempering phase A at a temperature of 42- 50°C, preferably 45-49°C, particularly preferably at 46-48°C Addition of an emulsifier mixture of egg yolk and at least one phospholipase to the liver mixture,
- after reaching a core temperature of the liver emulsion of 58°C, cooling the mixture of liver, emulsifier mixture, food fat, alcoholic beverage liquid and additives in a second tempering phase B to a temperature of 28 - 35°C, preferably 30 - 33°C, particularly preferably 32°C with a temperature gradient of 1-2°C/minute, preferably 1.5°C/minute while simultaneously stirring the mass with a mixing device to form a homogeneous cream,
- during the second tempering phase B at a temperature of 45 - 53°C, preferably 47-50°C, particularly preferably 48-49°C, adding further emulsifier mixture of egg yolk and at least one phospholipase to the liver cream,
- When the liver cream reaches a final temperature of 30 - 35°C, preferably 32-33°C, the liver cream is filled under pressure into suitable packaging,
- Heating the packages filled with the liver cream in a third tempering phase C to a temperature of 63-75°C, preferably 65-75°C, particularly preferably 68-72°C in a steam atmosphere and, after reaching the temperature, pasteurising the packages filled with the liver cream for a period of 30-90 minutes, preferably 35-70 minutes, particularly preferably 40-50 minutes,
- after completion of the pasteurisation process, cooling of the pasteurised liver cream in a fourth tempering phase D to a final temperature of the liver cream of 2-4°C.

2. Process according to claim 1, **characterised in that** the animal liver used is a poultry liver, in particular goose liver or duck liver, pork liver or beef liver.

3. Process according to one of the preceding claims, **characterised in that** spices, such as thyme, salt, sugar, bouillon, chicken stock, preferably dried chicken stock, antioxidants, in particular ascorbic acid, are used as additives for sensory and flavour adjustment.

4. Process according to one of the preceding claims, **characterised in that** nut butter, coconut fat and/or phlom fat are used as food fats.

5. Process according to claim 4, **characterised in that** the at least one food fat is provided at a temperature of between 40 and 45°C, preferably 43-44°C.

6. Process according to one of the preceding claims, **characterised in that** at least one brandy, in particular cognac or Armagnac, wine, in particular white port or Madeira, is used as the alcoholic beverage liquid.

7. Process according to one of the preceding claims, **characterised in that** in the first tempering phase A, a liver mixture of liquid nut butter, coconut fat and brandy, in particular cognac, is heated to 58°C with a temperature gradient of 1 - 1.5°C / 3 minutes.

8. Process according to one of the preceding claims, **characterised in that** the egg yolk - phospholipase - emulsifier mixture comprises between 1-2 g, preferably 1.5 g, of at least one phospholipase per kg of egg yolk.

9. Process according to one of the preceding claims, **characterised in that** after reaching a core temperature of the liver emulsion of 58°C, the liver emulsion is cooled in a second tempering phase B to a temperature of 30 - 33°C, particularly preferably 32°C with a temperature gradient of 1.5°C / minute with simultaneous stirring of the mass with a mixing device, in particular with an emulsifying rod mixer at at least 8000 rpm, to form a homogeneous cream.

10. Process according to one of the preceding claims, **characterised in that** further emulsifier mixture of egg yolk and at least one phospholipase is added during the second tempering phase B at a temperature of 48°C +- 0.5°C.

11. Process according to one of the preceding claims, **characterised in that** the liver cream is filled into jars or sausage casings when the liver cream reaches a final temperature of 30 - 35°C, preferably 32-33°C.

12. Process according to one of the preceding claims, **characterised in that** the packages filled with the liver cream are heated with 100% steam in a third tempering phase C and pasteurised for 40-50 minutes, preferably 45 minutes, after reaching the core temperature of 68-72°C.

13. Process according to one of the preceding claims, **characterised in that**, after the pasteurisation process, the pasteurised liver cream is cooled in the fourth tempering phase in a first step initially at a temperature of between -18°C and -22°C, preferably - 20°C, to a core temperature of 16 to 24°C, preferably 18 to 22°C, in particular preferably 20°C, and is cooled in a second step at a temperature of -4°C to 0°C, preferably -3°C to -1°C, in particular preferably -2°C, to a temperature of 2 to 4°C.

## Revendications

1. Procédé de fabrication d'un produit de substitution pouvant être cuit et mis en forme en bloc pour un bloc de foie gras,
comprenant les étapes suivantes
- de fourniture d'au moins une partie d'un foie animal et de retrait du tissu conjonctif du foie animal,
- de mélange de la masse de foie sans tissu conjonctif avec du sel et des additifs pour l'ajustement sensoriel et gustatif,
- de transformation mécanique de la masse de foie en une émulsion,
- de fourniture d'au moins une graisse alimentaire liquéfiée et d'au moins un liquide de boisson alcoolisé,
- de mélange de l'émulsion de foie avec la graisse alimentaire liquide et le liquide de boisson alcoolique, et de chauffage du mélange de foie dans une première phase de thermorégulation A en augmentant la température de 35 °C à 58 °C avec un gradient de température de 1-5 °C/1-5 minutes, de préférence 1 - 1,5 °C/3 minutes,
- pendant la première phase de thermorégulation A à une température de 42- 50 °C, de manière préférée de 45-49 °C, en particulier de manière préférée à 46-48 °C, d'ajout d'un mélange émulsifiant de jaune d'œuf et d'au moins une phospholipase au mélange de foie,
- après avoir atteint une température à cœur de l'émulsion de foie de 58 °C, de refroidissement du mélange de foie, du mélange émulsifiant, de la graisse alimentaire, du liquide de boisson alcoolisé et d'additifs dans une deuxième phase de thermorégulation B à une température de 28 - 35 °C, de manière préférée de 30 - 33 °C, de manière particulièrement préférée de 32 °C avec un gradient de température de 1-2 °C/minute, de manière préférée de 1,5 °C/minute en agitant simultanément la masse avec un mélangeur en réalisant une crème homogène,
- pendant la deuxième phase de thermorégulation B à une température de 45 - 53 °C, de manière préférée de 47-50 °C, de manière particulièrement préférée de 48-49 °C, d'ajout d'un mélange émulsifiant supplémentaire de jaune d'œuf et d'au moins une phospholipase à la crème de foie,
- à l'atteinte d'une température finale de la crème de foie de 30 - 35 °C, de manière préférée de 32-33 °C, de transvasement de la crème de foie sous pression dans des emballages appropriés,
- de chauffage des emballages remplis de la crème de foie dans une troisième phase de thermorégulation C à une température de 63 - 75 °C, de manière préférée de 65-75 °C, de manière particulièrement préférée de 68-72 °C dans une atmosphère de vapeur et, après avoir atteint la température, de pasteurisation des emballages remplis de la crème de foie pendant une période de 30-90 min, de manière préférée de 35 - 70 minutes, de manière particulièrement préférée de 40-50 minutes,
- après la fin de l'opération de pasteurisation, de refroidissement de la crème de foie pasteurisée dans une quatrième phase de thermorégulation D à une température finale de la crème de foie de 2-4 °C.

2. Procédé selon la revendication 1, **caractérisé en ce qu'**un foie de volaille, en particulier un foie d'oie ou de canard, un foie de porc ou un foie de bœuf est utilisé comme foie animal.

3. Procédé selon l'une quelconque des revendications précédentes, **caractérisé en ce que** sont utilisés, en tant qu'additifs pour l'ajustement sensoriel et gustatif, des épices comme du thym, du sel, du sucre, du bouillon, du bouillon de poulet, de manière préférée du bouillon de poulet séché, des antioxydants, en particulier de l'acide ascorbique.

4. Procédé selon l'une quelconque des revendications précédentes, **caractérisé en ce que** sont utilisés en tant que graisses alimentaires du beurre de noix, de la graisse de coco et/ou de la graisse de phloème.

5. Procédé selon la revendication 4, **caractérisé en ce qu'**au moins une graisse alimentaire est fournie à une température entre 40 et 45 °C, de manière préférée de 43-44 °C.

6. Procédé selon l'une quelconque des revendications précédentes, **caractérisé en ce qu'**au moins une eau-de-vie de vin, en particulier du cognac ou de l'armagnac, du vin, en particulier du porto blanc ou du madère, est utilisée comme liquide de boisson alcoolisé.

7. Procédé selon l'une quelconque des revendications précédentes, **caractérisé en ce qu'**au cours de la première phase de thermorégulation A, un mélange de foie composé de beurre de noix liquide, de graisse de coco et d'eau-de-vie de vin, en particulier de cognac, est chauffé à 58 °C avec un gradient de température de 1 - 1,5 °C/3 minutes.

8. Procédé selon l'une quelconque des revendications précédentes, **caractérisé en ce que** le mélange émulsifiant de jaune d'œuf et de phospholipase comprend entre 1-2 g, de manière préférée 1,5 g d'au moins une phospholipase par kg de jaune d'œuf.

9. Procédé selon l'une quelconque des revendications précédentes, **caractérisé en ce qu'**après avoir atteint une température à cœur de l'émulsion de foie de 58 °C, l'émulsion de foie est refroidie dans une deuxième phase de thermorégulation B à une température de 30 - 33 °C, de manière particulièrement préférée de 32 °C avec un gradient de température de 1,5 °C/minute en agitant simultanément la masse avec un mélangeur, en particulier avec un mélangeur à tige d'émulsion à min. 8000 tr/min, en réalisant une crème homogène.

10. Procédé selon l'une quelconque des revendications précédentes, **caractérisé en ce qu'**au cours de la deuxième phase de thermorégulation B à une température de 48 °C +- 0,5 °C, un mélange émulsifiant supplémentaire de jaune d'œuf et d'au moins une phospholipase est ajouté.

11. Procédé selon l'une quelconque des revendications précédentes, **caractérisé en ce que** la crème de foie est transvasée dans des bocaux ou des intestins à saucisses à l'atteinte d'une température finale de la crème de foie de 30 - 35 °C, de manière préférée de 32-33 °C.

12. Procédé selon l'une quelconque des revendications précédentes, **caractérisé en ce que** les emballages remplis de la crème de foie sont chauffés dans une troisième phase de thermorégulation C avec 100 % de vapeur d'eau et sont pasteurisés après avoir atteint la température à cœur de 68-72 °C pendant 40-50 minutes, de manière préférée 45 minutes.

13. Procédé selon l'une quelconque des revendications précédentes, **caractérisé en ce que**, après l'opération de pasteurisation, la crème de foie pasteurisée est refroidie dans la quatrième phase de thermorégulation dans une première étape d'abord à une température entre -18 °C et - 22 °C, de manière préférée de -20 °C à une température à cœur de 16 à 24 °C, de manière préférée de 18 à 22 °C, de manière particulièrement préférée de 20 °C et est refroidie dans une deuxième étape à une température de -4 °C à 0 °C, de manière préférée de -3°C à -1 °C, en particulier de manière préférée de -2 °C à une température de 2 à 4 °C.
